(19) Europäisches Patentamt
European Patent Office
Office européen des brevets

(11) **EP 1 316 354 A1**

(12) **EUROPÄISCHE PATENTANMELDUNG**

(43) Veröffentlichungstag:
**04.06.2003 Patentblatt 2003/23**

(51) Int Cl.[7]: **B01D 53/94**, B01J 21/00,
B01J 23/58, B01J 23/63

(21) Anmeldenummer: **01128599.6**

(22) Anmeldetag: **30.11.2001**

(84) Benannte Vertragsstaaten:
**AT BE CH CY DE DK ES FI FR GB GR IE IT LI LU MC NL PT SE TR**
Benannte Erstreckungsstaaten:
**AL LT LV MK RO SI**

(71) Anmelder: **OMG AG & Co. KG**
**63457 Hanau (DE)**

(72) Erfinder: **Die Erfindernennung liegt noch nicht vor**

(74) Vertreter: **Stellbrink, Axel et al**
**Vossius & Partner**
**Siebertstrasse 4**
**81675 München (DE)**

(54) **Katalysator zur Verminderung der Stickoxide im Abgas von Magermotoren**

(57) Die Erfindung betrifft einen Katalysator zur NOx-Verminderung im mageren Abgas von Magermotoren, welcher aktives Aluminiumoxid, Magnesiumoxid und wenigstens ein Edelmetall der Platingruppe des periodischen Systems der Elemente sowie wenigstens ein Stickoxid-Speichermaterial enthält. Der Katalysator ist dadurch gekennzeichnet, daß das Magnesiumoxid ein homogenes Mischoxid mit Aluminiumoxid bildet und in einer Konzentration von 1 bis 40 Gew.-%, bezogen auf das Gesamtgewicht des Mischoxids, vorliegt.

**Ermittlung des NO-Speicherwirkungsgrades**

**Figur 1**

**Beschreibung**

Die Erfindung betrifft einen Katalysator zur Verminderung der Stickoxide im Abgas von Magermotoren. Der Katalysator enthält Aluminiumoxid, Magnesiumoxid und wenigstens ein Stickoxid-Speichermaterial sowie wenigstens ein Edelmetall der Platingruppe des periodischen Systems der Elemente.

Auf dem Sektor der Benzinmotoren wurden zur Verminderung des Kraftstoffverbrauchs sogenannte Magermotoren entwickelt, die im Teillastbetrieb mit mageren Luft/Kraftstoffgemischen betrieben werden. Ein mageres Luft/Kraftstoffgemisch enthält eine höhere Sauerstoffkonzentration als für die vollständige Verbrennung des Kraftstoffes benötigt wird. Im entsprechenden Abgas liegen dann die oxidierenden Komponenten Sauerstoff ($O_2$), Stickoxide (NOx) im Überschuß gegenüber den reduzierenden Abgaskomponenten Kohlenmonoxid (CO), Wasserstoff ($H_2$) und Kohlenwasserstoffen (HC) vor. Mageres Abgas enthält gewöhnlich 3 bis 15 Vol.-% Sauerstoff. Innerhalb des Last- und Vollastbetriebs erfolgt aber auch bei mager betriebenen Ottomotoren eine stöchiometrische oder sogar unterstöchiometrische, das heißt fette, Luft/Kraftstoffaufbereitung.

Dieselmotoren arbeiten dagegen in der Regel unter Betriebsbedingungen mit weit überstöchiometrischen Luft/Kraftstoff-Gemischen. Erst in den letzten Jahren wurden Dieselmotoren entwickelt, die für kurze Dauer auch mit fetten Luft/Kraftstoff-Gemischen betrieben werden können. Auch Dieselmotoren, insbesondere solche mit der Möglichkeit fetter Betriebsphasen, werden im Rahmen der vorliegenden Erfindung als Magermotoren bezeichnet.

Wegen des hohen Sauerstoffgehaltes des Abgases von Magermotoren können die in ihm enthaltenen Stickoxide nicht wie bei stöchiometrisch betriebenen Ottomotoren mit Hilfe von sogenannten Dreiweg-Katalysatoren kontinuierlich unter gleichzeitiger Oxidation von Kohlenwasserstoffen und Kohlenmonoxid zu Stickstoff reduziert werden. Vielmehr wird bei diesen Katalysatoren in Abhängigkeit von der Abgastemperatur ein sogenanntes Temperaturfenster für die Reduktion der Stickoxide beobachtet. Mit steigender Abgastemperatur nimmt der Stickoxidumsatz zunächst zu und durchläuft bei einer bestimmten Temperatur ein Maximum, um bei höheren Temperaturen wieder auf Null zurückzugehen. Innerhalb des Temperaturfensters wirken die im mageren Abgas stets noch vorhandenen restlichen Kohlenwasserstoffe als Reduktionsmittel für die Stickoxide.

Lage und Breite des Temperaturfensters sowie der maximal erzielbare Stickoxidumsatz im Temperaturfenster hängen von der Formulierung des Katalysators und dem Restgehalt des Abgases an Kohlenwasserstoffen ab. Übliche Dreiweg-Katalysatoren zeigen nur einen geringfügigen Stickoxidumsatz im Temperaturfenster. Es konnten jedoch sogenannte HC-DeNOx-Katalysatoren entwickelt werden, die einen maximalen Stickoxidumsatz im Temperaturfenster von bis zu 60 % bei einer Temperatur im Bereich von 180 bis 250 °C aufweisen. Die Breite des Temperaturfensters beträgt dabei nur etwa 50 °C.

Trotz des relativ hohen Stickoxidumsatzes im Temperaturfenster wird mit diesen Katalysatoren über den gesetzlichen Fahrzyklus MVEG-A nur ein mittlerer Stickoxidumsatz von unter 30 % erhalten.

Zur Verbesserung dieser Situation wurden deshalb sogenannte Stickoxid-Speicherkatalysatoren entwickelt, die die im mageren Abgas enthaltenen Stickoxide in Form von Nitraten speichern.

Die Arbeitsweise von Stickoxid-Speicherkatalysatoren wird ausführlich in der SAE-Schrift SAE 950809 beschrieben. Stickoxid-Speicherkatalysatoren bestehen demgemäß aus einem Katalysatormaterial, welches zumeist in Form einer Beschichtung auf einem inerten Wabenkörper aus Keramik oder Metall, einem sogenannten Tragkörper, aufgebracht ist. Das Katalysatormaterial enthält das Stickoxid-Speichermaterial und eine katalytisch aktive Komponente. Das Stickoxid-Speichermaterial wiederum besteht aus der eigentlichen Stickoxid-Speicherkomponente, die auf einem Trägermaterial in hochdisperser Form abgeschieden ist.

Als Speicherkomponenten werden vorwiegend die basischen Oxide der Alkalimetalle, der Erdalkalimetalle und der Seltenerdmetalle, insbesondere aber Bariumoxid, eingesetzt, welche mit Stickstoffdioxid zu den entsprechenden Nitraten reagieren. Es ist bekannt, daß diese Materialien an Luft zum überwiegenden Teil in Form von Carbonaten und Hydroxiden vorliegen. Diese Verbindungen eignen sich ebenfalls zur Speicherung der Stickoxide. Wenn daher im Rahmen der vorliegenden Erfindung von den basischen Speicheroxiden gesprochen wird, so sind damit auch die entsprechenden Carbonate und Hydroxide eingeschlossen.

Als katalytisch aktive Komponenten werden gewöhnlich die Edelmetalle der Platingruppe verwendet, die in der Regel gemeinsam mit der Speicherkomponente auf dem Trägermaterial abgeschieden werden. Als Trägermaterial wird überwiegend aktives, hochoberflächiges Aluminiumoxid eingesetzt. Die katalytisch aktiven Komponenten können jedoch auch auf einem separaten Trägermaterial wie zum Beispiel aktivem Aluminiumoxid aufgebracht sein.

Die Aufgabe der katalytisch aktiven Komponenten ist es, im mageren Abgas Kohlenmonoxid und Kohlenwasserstoffe zu Kohlendioxid und Wasser umzusetzen. Außerdem sollen sie den Anteil des Abgases an Stickstoffmonoxid zu Stickstoffdioxid oxidieren, damit es mit dem basischen Speichermaterial zu Nitraten reagieren kann (Speicherphase). Mit zunehmender Einlagerung der Stickoxide ins Speichermaterial nimmt die Speicherkapazität des Materials ab und muß daher von Zeit zu Zeit regeneriert werden. Hierzu wird der Motor für kurze Zeit mit stöchiometrisch zusammengesetzten oder fetten Luft/Kraftstoff-Gemischen betrieben (sogenannte Regenerationsphase). Unter den reduzierenden Bedingungen im fetten Abgas werden die gebildeten Nitrate zu Stickoxiden $NO_x$ zersetzt und unter Verwendung von Kohlenmonoxid, Wasserstoff und Kohlenwasserstoffen als Reduktionsmittel zu Stickstoff unter Bildung von Wasser und Kohlendioxid reduziert.

Beim Betrieb des Stickoxid-Speicherkatalysators wechseln sich Speicherphase und Regenerationsphase regelmäßig ab. Die Speicherphase dauert gewöhnlich zwischen 60 und 120 Sekunden, während die Regenerationsphase schon in weniger als 20 Sekunden abgeschlossen ist.

Mit Stickoxid-Speicherkatalysatoren können wesentlich höhere Stickoxidumsätze über ein breiteres Temperaturfenster als mit den HC-DeNOx-Katalysatoren erzielt werden. Ihre Stickoxidumsätze genügen den Abgasgrenzwerten gemäß Euro IV-Norm, deren Einführung für das Jahr 2005 geplant ist.

Zur Verbesserung der Betriebssicherheit und Langzeitbeständigkeit dieser Katalysatoren ist es jedoch erforderlich, ihre Temperaturbeständigkeit zu erhöhen, ihr Temperaturfenster zu verbreitern und die in diesem Fenster erzielbaren Stickoxidumsätze weiter zu verbessern.

Es ist daher Aufgabe der vorliegenden Erfindung einen Katalysator für die Verminderung von Stickoxiden im Abgas von Verbrennungsmaschinen anzugeben, der gegenüber herkömmlichen Stickoxid-Speicherkatalysatoren eine verbesserte Temperaturbeständigkeit, ein breiteres Temperaturfenster und einen höheren Stickoxidumsatz in diesem Temperaturfenster aufweist.

Diese Aufgabe wird gelöst durch einen Katalysator zur Verminderung der Stickoxide im Abgas von Magermotoren, welcher wenigstens ein Edelmetall der Platingruppe des periodischen Systems der Elemente sowie wenigstens ein Stickoxid-Speichermaterial in Kombination mit einem homogenen Mg/Al-Mischoxid aus Magnesiumoxid und Aluminiumoxid enthält, wobei Magnesiumoxid in einer Konzentration von 1 bis 40 Gew.-%, bezogen auf das Gesamtgewicht des Mg/Al-Mischoxids, vorliegt. Bevorzugt beträgt die Konzentration des Magnesiumoxids im Aluminiumoxid zwischen 5 und weniger als 28, insbesondere zwischen 10 und 25 Gew.-%.

Die vorliegende Erfindung wird durch Anspruch 1 beschrieben. Vorteilhafte Weiterentwicklungen und Ausführungsformen werden durch die Unteransprüche definiert.

Vor einer eingehenden Erläuterung der Erfindung werden im folgenden einige Begriffe definiert, die für die Erfindung von Bedeutung sind:

Unter einem Mischoxid wird im Rahmen der Erfindung ein oxidisches, festes Pulvermaterial verstanden, welches aus wenigstens zwei Komponenten besteht, die eine Mischung auf atomarer Ebene bilden. Dieser Begriff schließt physikalische Mischungen oxidischer Pulvermaterialien aus. Eine wesentliche Komponente des erfindungsgemäßen Katalysators ist ein homogenes Mischoxid aus Magnesiumoxid und Aluminiumoxid. Es wird im Rahmen dieser Erfindung als Mg/Al-Mischoxid bezeichnet. Seine Zusammensetzung ist im Rahmen der Meßgenauigkeit über den Querschnitt eines Pulverkorns konstant, das heißt homogen.

Im folgenden wird zwischen einem Stickoxid-Speichermaterial und den Stickoxid-Speicherkomponenten unterschieden. Stickoxid-Speicherkomponenten sind zum Beispiel die Oxide, Carbonate oder Hydroxide der Alkali- und Erdalkalimetalle, die auf Grund ihrer basischen Eigenschaften in der Lage sind, mit den sauren Stickoxiden des Abgases Nitrate zu bilden und sie auf diese Weise abzuspeichern. Ein Stickoxid-Speichermaterial besteht aus den Speicherkomponenten, die zur Erzeugung einer großen Wechselwirkungsfläche mit dem Abgas in möglichst hoher Dispersion auf geeigneten Trägermaterialien abgeschieden sind.

Für Stickoxid-Speicherkatalysatoren werden häufig Speichermaterialien verwendet, die Bariumoxid und/oder Strontiumoxid auf einem hochoberflächigen Trägermaterial wie zum Beispiel Aluminiumoxid enthalten.

Untersuchungen der Erfinder zur Speicherung von Stickoxiden mit Hilfe von auf Aluminiumoxid abgeschiedenem Magnesiumoxid zeigten eine unbefriedigende Speicherwirkung. Überraschenderweise wurde jedoch gefunden, daß bei einer Kombination dieses Materials mit anderen Speichermaterialien, insbesondere solchen auf der Basis von Bariumoxid oder Strontiumoxid, unter bestimmten Bedingungen eine deutliche Verbesserung des noch zu definierenden NOx-Speicherwirkungsgrades erhalten werden kann.

Als wesentlich erwies es sich hierbei, daß Magnesiumoxid und Aluminiumoxid ein homogenes Mischoxid bilden. In einem solchen Mischoxid aus Magnesiumoxid und Aluminiumoxid nehmen die Magnesiumionen die Gitterplätze von Aluminiumionen ein, so daß die Röntgenstruktur dieses Materials von der Röntgenstruktur des reinen Aluminiumoxids nicht zu unterscheiden ist. Das Material weist bevorzugt eine spezifische Oberfläche von mehr als 40, insbesondere von 100 bis 200 m$^2$/g auf. Besonders bevorzugt sind Materialien mit einer spezifischen Oberfläche von 130 bis 170 m$^2$/g. Das Magnesiumoxid verleiht dem Mg/Al-Mischoxid eine gegenüber $\gamma$-Aluminiumoxid verbesserte Temperaturstabilität. Diese ist jedoch nur dann optimal, wenn das Magnesiumoxid im Aluminiumoxid möglichst homogen über das gesamte Korn des Mischoxids verteilt ist. Eine nur oberflächliche Einbringung des Magnesiumoxids in das Korn des Aluminiumoxids führt nicht zur gewünschten Temperaturstabilität.

Bevorzugt kann ein solches Material durch einen sogenannten Sol-Gel-Prozeß hergestellt werden. Ein solcher Prozeß wird zum Beispiel in der US 6,217,837 B1 beschrieben. Ebenso geeignet ist das in der DE 195 03 522 A1 beschriebene Verfahren unter Verwendung von Alkoholatgemischen und anschließender Hydrolyse mit Wasser.

Die nachträgliche Imprägnierung von Aluminiumoxid mit löslichen Vorläuferverbindungen von Magnesiumoxid und Calcinierung zur Überführung der Vorläuferverbindung in Magnesiumoxid führt bei üblichen Calciniertemperaturen nicht zu homogenen Mg/Al-Mischoxiden. Versucht man die Bildung homogenen Mg/Al-Mischoxiden durch Erhöhung der Calciniertemperaturen zu erzwingen, erhält man niedrigoberflächige Mischoxide, die für katalytische Anwendungen nicht geeignet sind.

Eine weitere Verbesserung der Temperaturstabilität des Mg/Al-Mischoxids kann durch oberflächliche Imprägnierung des Mischoxids mit einem oder mehreren Seltenerdoxiden erhalten werden, insbesondere durch Belegen des Mg/Al-Mischoxids mit Praseodymoxid und/oder Ceroxid.

Die Verwendung des Mg/Al-Mischoxids im erfindungsgemäßen Katalysator in Kombination mit dem Stickoxid-Speichermaterial des Katalysators führt zu einer synergistischen Verbesserung des Stickoxid-Speichervermögens des Katalysators, die nicht durch die Additive Wirkung von Magnesiumoxid und Speichermaterial erklärbar ist. Daneben dient das Mg/Al-Mischoxid im Katalysator auch als Trägermaterial für die katalytisch aktiven Edelmetalle der Platingruppe. Bevorzugt werden Platin, Palladium, Rhodium oder Mischungen davon eingesetzt. Die gesamte Menge der für den Katalysator vorgesehenen Edelmetalle kann vollständig auf dem Mg/Al-Mischoxid abgeschieden sein. Bevorzugt wird jedoch nur eine Teilmenge der Edelmetalle auf dem Mg/Al-Mischoxid aufgebracht.

In einer besonderen Ausführungsform des Katalysators werden auf dem homogenen Mg/Al-Mischoxid die Edelmetalle Platin und/oder Palladium aufgebracht. Eine weitere Teilmenge von Platin kann direkt auf dem Stickoxid-Speichermaterial abgeschieden werden. Hierdurch erfolgt die Oxidation von Stickstoffmonoxid zu Stickstoffdioxid in direkter Nachbarschaft zu den Speicherkomponenten, was sich positiv auf die Aktivität (Speicherung und Regeneration) des Katalysators bei hohen Abgastemperaturen auswirkt.

Um eine möglichst vollständige Umsetzung der desorbierten Stickoxide während der Regenerationsphase zu erreichen, ist es vorteilhaft, dem Katalysator ein weiteres Trägermaterial hinzuzufügen, auf welchem Rhodium abgeschieden ist. Als Trägermaterial für Rhodium eignet sich aktives, gegebenenfalls stabilisiertes Aluminiumoxid.

Als weiteres Trägermaterial eignen sich auch Ceroxid oder Cer/Zirkon-Mischoxide. Anstelle von Rhodium wird auf diesem weiteren Trägermaterial bevorzugt Platin abgeschieden.

In einer weiteren Ausführungsform des Katalysators können auf dem homogenen Mg/Al-Mischoxid die Edelmetalle Platin und/oder Rhodium aufgebracht werden. Auch in diesem Fall kann eine weitere Teilmenge von Platin direkt auf dem Stickoxid-Speichermaterial abgeschieden werden. Um eine möglichst vollständige Umsetzung der desorbierten Stickoxide während der Regenerationsphase zu erreichen, kann auch bei dieser Ausführungsform dem Katalysator ein weiteres Trägermaterial hinzugefügt werden, auf welchem Rhodium abgeschieden ist. Bevorzugt wird als weiteres Trägermaterial aktives, gegebenenfalls stabilisiertes Aluminiumoxid eingesetzt. Alternativ eignen sich als weiteres Trägermaterial auch Ceroxid oder Cer/Zirkon-Mischoxide, auf dem anstelle von Rhodium Platin abgeschieden wird.

Als Stickoxid-Speicherkomponenten für den erfindungsgemäßen Katalysator können Oxide, Carbonate oder Hydroxide von Magnesium, Calcium, Strontium, Barium, den Alkalimetallen, den Seltenerdmetallen oder Mischungen davon eingesetzt werden. Als Trägermaterial für diese Komponenten eignen sich hochschmelzende Metalloxide, deren Schmelzpunkt oberhalb der im Verfahren auftretenden Temperaturen liegt. Diese Metalloxide werden bevorzugt ausgewählt aus der Gruppe bestehend aus Ceroxid, Mischoxiden des Cers, Aluminiumoxid, Magnesiumoxid, einem homogenen Mg/Al-Mischoxid, Calciumtitanat, Strontiumtitanat, Bariumtitanat, Bariumzirkonat, Lanthanoxid, Praseodymoxid, Samariumoxid, Neodymoxid, Yttriumoxid und Lanthanmanganat oder Mischungen davon.

Besonders vorteilhaft ist die Verwendung von Strontium oder Barium als Stickoxid-Speicherkomponenten, die auf einem Trägermaterial aus Ceroxid oder Mischoxiden des Cers fixiert sind. Gut geeignet als Trägermaterial für die Stickoxid-Speicherkomponenten ist ein Mischoxid des Cers, insbesondere ein Cer/Zirkon-Mischoxid mit einem Zirkonoxidgehalt von 1 bis 25 Gew.-%, bezogen auf das Gesamtgewicht des Mischoxids. Das Mischoxid kann zusätzlich mit 0,5 bis 80 Gew.-% mindestens eines Oxids eines Elementes aus der Gruppe gebildet aus Zirkon, Silicium, Scandium, Yttrium, Lanthan und den Seltenerdmetallen oder Mischungen davon, bezogen auf das Gesamtgewicht des Speichermaterials, dotiert sein. Bevorzugt erfolgt eine Dotierung des Cer/Zirkon-Mischoxids mit 0,5 bis 10 Gew.-% Lanthan- und/oder Praseodymoxid, bezogen auf das Gesamtgewicht von Cer/Zirkon-Mischoxid und Lanthan- und/oder Praseodymoxid.

Der erfindungsgemäße Katalysator eignet sich besonders für die Reinigung der Abgase von Magermotoren, das heißt von mager betriebenen Benzinmotoren und von Dieselmotoren.

Die Erfindung wird an Hand der folgenden Beispiele und Figuren näher erläutert. Es zeigen:

**Figur 1:** Ermittlung des NOx-Speicherwirkungsgrades

**Figur 2:** NOx-Speicherwirkungsgrad für Vergleichskatalysator 1

**Figur 3:** NOx-Speicherwirkungsgrad für die Vergleichskatalysatoren 1 und 2

**Figur 4:** NOx-Speicherwirkungsgrad für die Katalysatoren von Beispiel 1

**Figur 5:**    NOx-Speicherwirkungsgrad für die Katalysatoren von Beispiel 2

**Figur 6:**    NOx-Speicherwirkungsgrad für die Katalysatoren von Beispiel 3

**Figur 7:**    NOx-Speicherwirkungsgrad für die Katalysatoren von Beispiel 4 im Vergleich zu Vergleichskatalysator 1

**Figur 8:**    NOx-Speicherwirkungsgrad für Katalysator 4b und Katalysatoren des Beispiels 5

**Figur 9:**    NOx-Speicherwirkungsgrad für Katalysator 4b und die Vergleichsbeispiele 3 und 4

**Figur 10:**    NOx-Speicherwirkungsgrad für Katalysator 4b und die Vergleichsbeispiele 5 und 6

**Figur 11:**    NOx-Speicherwirkungsgrad für die Katalysatoren der Beispiele 6 und 7

**Figur 12:**    NOx-Speicherwirkungsgrad für Katalysator 6b und dem Vergleichsbeispiel 1 nach Alterungen bei verschiedenen Temperaturen (850°C, 900°C und 950°C)

**Figur 13:**    TEM-Aufnahme des mit Platin belegten Mg/Al-Mischoxids II (siehe Tabelle 2) , wobei das Magnesiumoxid homogen im Aluminiumoxid gelöst ist (katalytisches Pulver 1).

**Figur 14:**    TEM-Aufnahme des mit Platin belegten Mg/Al-Oxids II von Vergleichsbeispiel 3 aus Magnesiumoxid und Aluminiumoxid. In diesem Fall wurde Magnesiumoxid durch Imprägnieren auf das Aluminiumoxid aufgebracht.

Wie schon oben erläutert, wurde gefunden, daß die Kombination des Mg/Al-Mischoxids mit Speichermaterialien besonders auf der Basis von Bariumoxid und Strontiumoxid zu einem synergistischen Effekt bezüglich der Breite des Temperaturfensters der Stickoxid-Speicherung und auch bezüglich des maximalen Umsetzungsgrades führt. An dem Mg/Al-Mischoxid allein läßt sich dieser Effekt nicht feststellen. Es wurden daher in den folgenden Beispielen und Vergleichsbeispielen komplette Katalysatoren unter Verwendung dieses Materials hergestellt und ihr Speicherwirkungsgrad für die Stickoxide in Abhängigkeit von der Abgastemperatur bestimmt. Der Speicherwirkungsgrad eines Katalysators ist die wichtigste Kenngröße zur Beurteilung seiner Leistungsfähigkeit. Sie beschreibt die Effizienz bezüglich der Entfernung von Stickoxiden aus dem Abgas von Magermotoren.

Der NOx-Speicherwirkungsgrad der Katalysatoren wurde an einer Modellgasanlage ermittelt. Hierzu wurden die Speicherkatalysatoren einem sogenannten Fett/Mager-Zyklus ausgesetzt, das heißt die Katalysatoren wurde abwechselnd von magerem und fettem Abgas bei einer definierten Temperatur durchströmt. Magere Abgaszusammensetzungen wurden durch Zuführen von Sauerstoff bei gleichzeitiger Unterbrechung der Zufuhr von Kohlenmonoxid und Wasserstoff eingestellt. Fette Abgaszusammensetzungen wurden durch die umgekehrte Vorgehensweise erzeugt.

Innerhalb der Magerphase wurden die Stickoxide vom jeweiligen Katalysator gespeichert. Während der Fettphasen wurden die Stickoxide wieder desorbiert und am Katalysator mit den reduktiven Komponenten Kohlenmonoxid, Wasserstoff und Kohlenwasserstoffe des Modellgases zu Stickstoff, Kohlendioxid und Wasser umgesetzt.

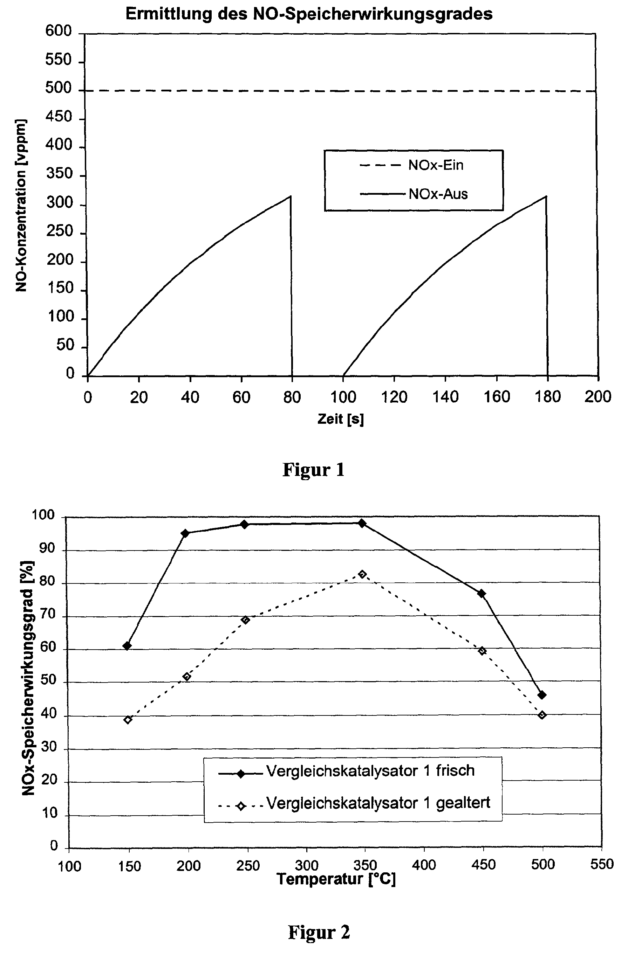

Figur 1 zeigt diese Verhältnisse in idealisierter Weise. Während der Messungen weist das Abgas eine konstante Konzentration von 500 vppm (Volumen ppm) an Stickstoffmonoxid (NO) auf. Die in den Speicherkatalysator eintretende Stickoxidkonzentration (NOx-Ein) wird daher durch die gestrichelte Gerade in Figur 1 wiedergegeben. Die Stickoxidkonzentration hinter dem Speicherkatalysator (NOx-Aus) ist zunächst Null, da der frische Speicherkatalysator im Idealfall alle im Abgas enthaltenen Stickoxide bindet. Mit zunehmender Zeit wird der Speicherkatalysator mit Stickoxiden beladen und seine Speicherkapazität verringert sich. Dadurch werden zunehmend weniger Stickoxide am Speicherkatalysator gebunden, so daß hinter dem Katalysator eine ansteigende Stickoxidkonzentration meßbar wird, die nach vollständiger Absättigung des Speicherkatalysators mit Stickoxiden sich der Eingangskonzentration angleichen würde. Daher muß nach einer gewissen Zeit (in Figur 1 nach 80 Sekunden) die Regeneration des Speicherkatalysators eingeleitet werden. Dies geschieht durch Anfetten des Abgases für die Dauer von etwa 20 Sekunden. Hierdurch werden die gespeicherten Stickoxide desorbiert und im Idealfall am Speicherkatalysator vollständig umgesetzt, so daß während der Regenerationszeit keine Stickoxide hinter dem Speicherkatalysator meßbar sind. Danach wird wieder auf mageres Abgas umgeschaltet und die Einspeicherung von Stickoxiden beginnt von neuem.

Der momentane Speicherwirkungsgrad des Speicherkatalysators ist definiert als das Verhältnis

$$\frac{NO_xEin - NO_xAus}{NO_xEin} \, .$$

Wie aus Figur 1 ersichtlich ist, ist dieser Wirkungsgrad zeitabhängig. Zur Beurteilung der Speicherkatalysatoren wurde daher der über die jeweilige Speicherphase integrierte und über acht aufeinanderfolgende Speicherzyklen gemittelte Speicherwirkungsgrad S bestimmt:

$$S = \frac{1}{8}\sum_{1}^{8}\int_{t=0}^{80}\frac{NO_x Ein - NO_x Aus}{NO_x Ein}dt \times 100 \; [\%].$$

Der Speicherwirkungsgrad S ist somit keine Materialkonstante, sondern von den Parametern des gewählten Fett/Mager-Zyklusses abhängig. Für die Beurteilung der hergestellten Speicherkatalysatoren wurden die folgenden Bedingungen gewählt:

**Parameter des Fett/Mager-Zyklus**

| | |
|---|---|
| Raumgeschwindigkeit | 30.000 h$^{-1}$ |
| Temperaturbereich | 150 - 500 °C in 50 °C Schritten |
| Anzahl der Fett/Mager-Zyklen | 8 pro Temperaturstufe |
| Dauer der Magerphase | 80 Sekunden |
| Dauer der Fettphase | 20 Sekunden |

Tabelle 1:

| Abgaszusammensetzung | | | | |
|---|---|---|---|---|
| Gaskomponente | Konzentration | | | |
| | während der Magerphase | | während der Fettphase | |
| NO | 500 | vppm | 500 | vppm |
| $CO_2$ | 10,0 | Vol.-% | 10,0 | Vol.-% |
| $H_2O$ | 10,0 | Vol.-% | 10,0 | Vol.-% |
| $C_3H_6$ | 50 | vppm | 50 | vppm |
| | | | | |
| $O_2$ | 8,0 | Vol.-% | 0,2 | Vol.-% |
| CO | 0,0 | Vol.-% | 2,67 | Vol.-% |
| $H_2$ | 0,0 | Vol.-% | 1,33 | Vol.-% |

Die in den folgenden Beispielen untersuchten Katalysatorformulierungen bestehen aus verschiedenen Komponenten. Diese Komponenten wurden zu einer wäßrigen Beschichtungssuspension verarbeitet, mit der Wabenkörper aus Cordierit mit einer Zelldichte von 62 cm$^{-2}$ (Anzahl der Strömungskanäle der Wabenkörper pro Querschnittsfläche) mit Hilfe eines Tauchverfahrens beschichtet wurden. Die beschichteten Wabenkörper wurden getrocknet und anschließend bei 500 °C für die Dauer von 2 Stunden an Luft calciniert.

Der Stickoxid-Speicherwirkungsgrad der beschichteten Wabenkörper wurde wie oben beschrieben in einer Modellgasanlage im Frischzustand und nach Alterung ermittelt. Zwecks Alterung wurden die Katalysatoren bei einer Temperatur von 850 °C für die Dauer von 24 Stunden an Luft gelagert.

In den Figuren 2 bis 12 sind die auf diese Weise ermittelten Speicherwirkungsgrade für verschiedene Speicherkatalysatoren in Abhängigkeit von der Abgastemperatur aufgetragen. Tabelle 3 enthält die Zusammensetzung der Beschichtung der untersuchten Katalysatoren. Die erste und zweite Spalte dieser Tabelle enthalten die verwendeten Beschichtungskomponenten und deren Konzentration in Gramm pro Liter Wabenkörpervolumen. Die Spalten 3 bis 5 enthalten die Konzentration der auf den einzelnen Beschichtungskomponenten befindlichen Platingruppenmetalle. In einigen Beispielen wurden Mischoxid und Speichermaterial gleichzeitig mit Edelmetallen imprägniert. In diesen Fällen ist in der Tabelle 3 nur die Gesamtkonzentration des Edelmetalles (zum Beispiel Platin) auf beiden Materialien angegeben.

**Herstellung platinhaltiger, katalytischer Mg/Al-Mischoxidpulver**

Für die folgenden Beispiele und Vergleichsbeispiele wurden homogene Mg/Al-Mischoxidpulver mit verschiedenen Mischungsverhältnissen von Magnesiumoxid zu Aluminiumoxid hergestellt. Hierzu wurde gemäß DE 195 03 522 A1 zunächst ein Gemisch aus einem Magnesium- und einem Aluminiumalkoholat angefertigt und dieses Gemisch mit Wasser hydrolysiert. Das erhaltene Hydroxidgemisch wurde getrocknet und zur Fertigstellung des homogenen Mischoxids bei 700 °C für die Dauer von 24 Stunden an Luft calciniert.

Auf diese Weise wurden vier Pulver mit den folgenden Mischungsverhältnissen von Magnesiumoxid zu Aluminiumoxid angefertigt:

Tabelle 2:

| Zusammensetzung und Eigenschaften der Mg/Al-Mischoxidpulver | | | |
|---|---|---|---|
| Bezeichnung | MgO-Gehalt [Gew.-%] | $Al_2O_3$-gehalt [Gew.-%] | BET-Oberfläche [$m^2/g$] |
| Mg/Al-Mischoxid I | 28,2 | 71,8 | 160 |
| Mg/Al-Mischoxid II | 20 | 80 | 142 |
| Mg/Al-Mischoxid III | 10 | 90 | 162 |
| Mg/Al-Mischoxid IV | 5 | 95 | 153 |

Das Mg/Al-Mischoxid I entspricht in seiner Zusammensetzung einem Magnesium-Aluminium-Spinell (MgO • $Al_2O_3$). Die Erfindung ist jedoch nicht auf Magnesiumoxidgehalte des Mischoxids beschränkt, die kleiner oder gleich sind als die eines stöchiometrischen Magnesium-Aluminium-Spinells. Die synergistische Wirkung dieses Mischoxids auf die katalytischen Aktivität von Stickoxid-Speichermaterialien wurde auch noch bei Magnesiumoxidgehalten von 40 Gew.-% beobachtet.

Die Morphologie des homogenen Mg/Al-Mischoxids II wurde mit Hilfe eines Transmissionselektronenmikroskops (TEM) untersucht. Das Material wurde zuerst mit 2,5 Gew.-% Platin, bezogen auf das Gesamtgewicht aus Mg/Al-Mischoxid und Platin, belegt. Zu diesem Zweck wurde das Mg/Al-Mischoxid in Wasser suspendiert und durch Zugabe einer Lösung von in Ethanolamin gelöster Hexahydroxoplatinsäure (H2Pt(OH)6) imprägniert. Nach erfolgter Adsorption des Edelmetalls auf dem Mischoxid wurde es getrocknet und bei 500 °C an Luft calciniert.

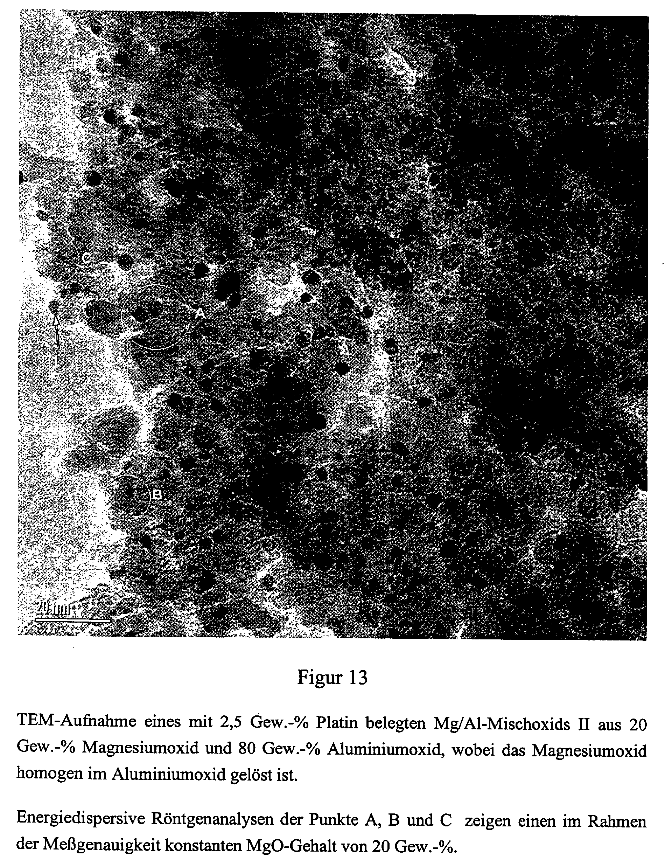

Figur 13 zeigt eine elektronenmikroskopische Aufnahme des hergestellten Pulvermaterials. An den mit A, B und C bezeichneten Punkten wurde die Zusammensetzung des Materials mit Hilfe der energiedispersiven Röntgenanalyse ermittelt. Im Rahmen der Meßgenauigkeit weist das Material an allen Punkten einen konstanten MgO-Gehalt von 20 Gew.-% auf.

**Vergleichsbeispiel 1:** (Vergleichskatalysator VK1)

Es wurde ein konventioneller Speicherkatalysator hergestellt, der ein Speichermaterial, ein mit Platin und Palladium belegtes Aluminiumoxid und ein mit Rhodium belegtes Aluminiumoxid enthielt.

Als Speichermaterial wurde ein mit Bariumoxid belegtes Cer/Zirkon-Mischoxid (90 Gew.-% Ceroxid und 10 Gew.-% Zirkonoxid) eingesetzt, welches nach dem in der DE 199 55 456 A1 beschriebenen Verfahren hergestellt worden war. Die Konzentration der Speicherkomponente Bariumoxid betrug 17,8 Gew.-%, bezogen auf das Gesamtgewicht des Speichermaterials. Das Material wies eine BET-Oberfläche von 23 $m^2/g$ auf. Es wird im folgenden als BaO/Ce/Zr-Oxid bezeichnet.

Zur Herstellung des mit Rhodium belegten Aluminiumoxids wurde ein mit 3 Gew.-% Lanthan stabilisiertes Aluminiumoxid (BET-Oberfläche: 202 $m^2/g$) vorgelegt und mit einer Rhodiumnitratlösung imprägniert, getrocknet und bei 500 °C an Luft calciniert, so daß das fertige Material insgesamt 3,37 Gew.-% Rhodium, bezogen auf das Gesamtgewicht des Materials, enthielt.

Zur Herstellung des mit Platin und Palladium belegten Aluminiumoxids wurde ein mit 10 Gew.-% Lanthanoxid stabilisiertes Aluminiumoxid (BET-Oberfläche 170 $m^2/g$) vorgelegt und zunächst mit einer wäßrigen Lösung von in Ethanolamin gelöster Hexahydroxoplatinsäure ($H_2Pt(OH)_6$) imprägniert, getrocknet und bei 500 °C an Luft calciniert. Das Material enthielt 2,5 Gew.-% Platin, bezogen auf sein Gesamtgewicht. Dieses Material wurde sodann in Wasser suspendiert. Zu dieser Suspension wurde eine Lösung Palladiumnitrat gegeben und nach Sorption des Palladiumnitrats auf dem Material wurden das Speichermaterial und das mit Rhodium belegte Aluminiumoxid zur Suspension hinzugefügt. Die Suspension wurde auf eine Partikelgröße von 3-5 µm ($d_{50}$) gemahlen und mittels eines Tauchverfahrens auf einen handelsüblichen Wabenkörper aus Cordierit mit 62 Zellen pro Quadratzentimeter aufgebracht.

Der auf diese Weise beschichtete Wabenkörper wurden bei 120°C im Trockenschrank getrocknet. Anschließend erfolgte eine vierstündige Calcinierung des beschichteten Wabenkörpers bei 500 °C.

Tabelle 3 gibt für diesen im folgenden als Vergleichskatalysator VK1 bezeichneten Katalysator die Konzentration der einzelnen Beschichtungsmaterialien in Gramm pro Liter Wabenkörpervolumen und die Konzentration der auf ihnen abgeschiedenen Platingruppenmetalle an.

Figur 2 zeigt den Stickoxid-Speicherwirkungsgrad für diesen Vergleichskatalysator im frischen und gealterten Zustand. Während der Katalysator im frischen Zustand eine sehr gute Stickoxid-Speicherfähigkeit aufweist, bricht diese nach Alterung des Katalysators deutlich zusammen.

**Vergleichsbeispiel 2:** (Vergleichskatalysator VK2)

Es wurde ein weiterer Vergleichskatalysator (VK2) mit der in Tabelle 3 angegebenen Zusammensetzung angefertigt. Als katalytisch aktives Edelmetall wurde nur Platin eingesetzt, welches im Gegensatz zu Vergleichsbeispiel 1 statt auf einem stabilisierten Aluminiumoxid auf dem homogenen Mg/Al-Mischoxid II abgeschieden wurde. Anstelle des Speichermaterials BaO/Ce/Zr-Oxid wurde ebenfalls das Mg/Al-Mischoxid II eingesetzt.

Zur Abscheidung von Platin auf dem Mg/Al-Mischoxid wurde dieses Pulver mit einer wäßrigen Lösung von in Ethanolamin gelöster Hexahydroxoplatinsäure ($H_2Pt(OH)_6$) imprägniert, getrocknet und bei 500 °C an Luft calciniert. Das so hergestellte Mischoxid enthielten 2,5 Gew.-% Platin, bezogen auf sein Gesamtgewicht.

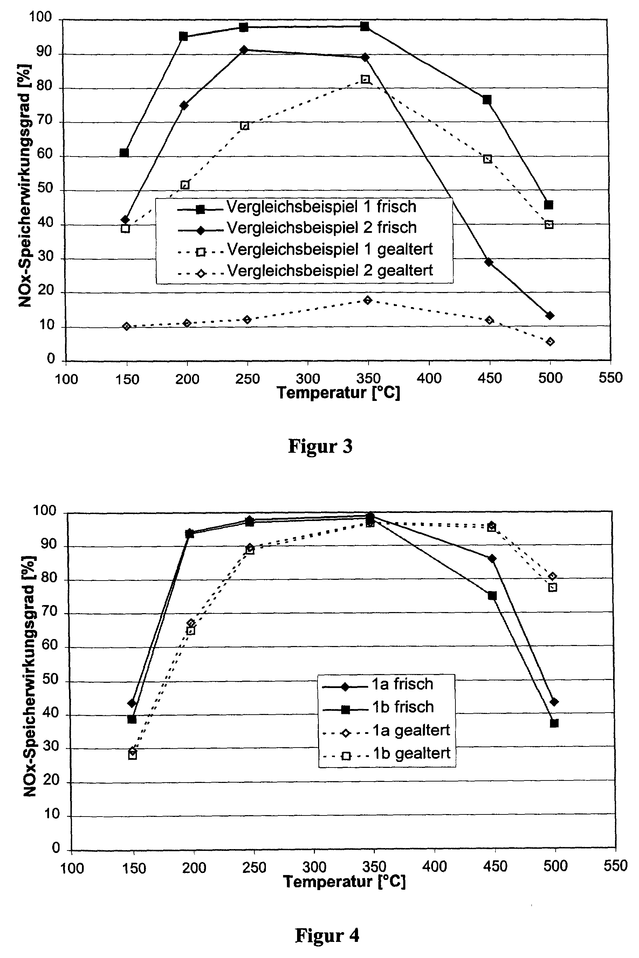

Figur 3 zeigt den Vergleich der Stickoxid-Speicherwirkungsgrade für die beiden Vergleichskatalysatoren VK1 und VK2 jeweils im frischen und gealterten Zustand. Schon im Frischzustand ist Katalysator VK2 deutlich schlechter als Katalysator VK1. Nach Alterung ist der Vergleichskatalysator VK2 für die Speicherung von Stickoxiden völlig unbrauchbar geworden.

**Beispiel 1** (Katalysatoren K1a und K1b)

Es wurden zwei erfindungsgemäße Speicherkatalysatoren hergestellt, die im folgenden mit K1a und K1b bezeichnet werden.

Im Gegensatz zu Vergleichsbeispiel 2 wurde für die Anfertigung des Katalysators K1a das nicht mit Platin belegte Mg/Al-Mischoxid von Vergleichsbeispiel 2 durch das Speichermaterial BaO/Ce/Zr-Oxid ersetzt. Die Zusammensetzung des Katalysators ist der Tabelle 3 zu entnehmen.

Für die Herstellung des Katalysators K1b wurde zunächst eine wäßrige Suspension aus dem Speichermaterial BaO/Ce/Zr-Oxid und dem Mg/Al-Mischoxid II angefertigt. Zu dieser Suspension wurde eine Lösung von in Ethanolamin gelöster Hexahydroxoplatinsäure (H2Pt(OH)6) gegeben. Nach erfolgter Adsorption des Edelmetalls auf beiden oxidischen Komponenten der Suspension wurde damit ein Wabenkörper beschichtet. Die Beschichtungszusammensetzung ist der Tabelle 3 zu entnehmen. Im Gegensatz zu Katalysator K1a befindet sich das Edelmetall Platin bei Katalysator K1b sowohl auf dem Mg/Al-Mischoxid als auch auf dem Speichermaterial.

Figur 4 zeigt für beide Katalysatoren den Vergleich der Frischaktivität mit der Aktivität nach Alterung. Nach Alterung weisen die erfindungsgemäßen Katalysatoren über das gesamte Temperaturfenster eine deutlich höhere Speicherfähigkeit als der Vergleichskatalysator VK1 auf. Auffällig ist auch, daß sich die Speicherfähigkeit bei höheren Temperaturen gegenüber dem Frischzustand deutlich verbessert.

**Beispiel 2** (Katalysatoren 2a und 2b)

Zur Herstellung von Katalysator 2a wurde das Mg/Al-Mischoxid II zunächst wie in Vergleichsbeispiel 2 mit Platin belegt und dann in Wasser suspendiert. In die Suspension wurde Palladiumnitrat eingerührt. Nach Sorption von Palladiumnitrat auf dem mit Platin katalysiertem Mg/Al-Mischoxid wurde das Speichermaterial BaO/Ce/Zr-Oxid der Suspension hinzugefügt und ein Wabenkörper mit der resultierenden Suspension beschichtet.

Zur Herstellung von Katalysator 2b wurde das Mg/Al-Mischoxid II zunächst wie in Vergleichsbeispiel 2 mit Platin belegt und dann gemeinsam mit dem Speichermaterial in Wasser suspendiert. Dann wurde in die Suspension Palladiumnitrat eingerührt. Nach Sorption von Palladiumnitrat auf beiden oxidischen Komponenten wurde ein Wabenkörper mit der resultierenden Suspension beschichtet.

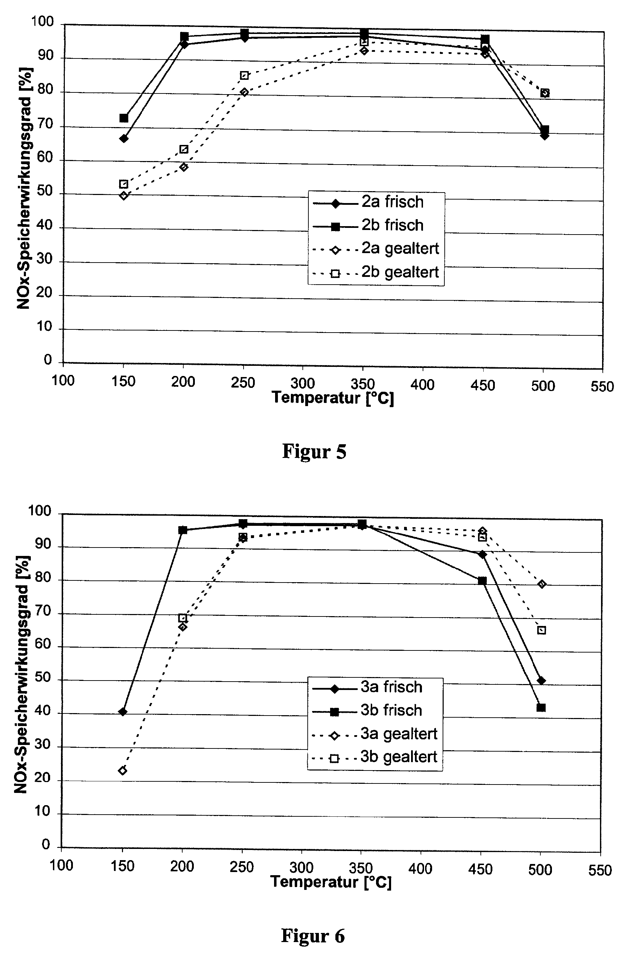

Die Stickoxid-Speicherwirkungsgrade für beide Katalysatoren sind im frischen und gealterten Zustand in Figur 5 wiedergegeben. Beide Katalysatoren weisen im frischen Zustand ein wesentlich verbreitertes Temperaturfenster gegenüber allen bisher untersuchten Katalysatoren auf.

**Beispiel 3** (Katalysatoren K3a und K3b)

Beispiel 2 wurde wiederholt, jedoch wurde Palladium durch Rhodium ersetzt, so daß sich die in Tabelle 3 wiedergegebenen Katalysatorzusammensetzungen ergaben. Als Vorläuferverbindung für Rhodium wurde Rhodiumnitrat verwendet.

Die durch den Austausch von Palladium durch Rhodium erzielten Stickoxid-Speicherkapazitäten sind in Figur 6 zusammengefaßt. Während die frischen Katalysatoren lediglich im Hochtemperaturbereich Unterschiede in der Speicherkapazität gegenüber Beispiel 2 aufweisen, zeigen die gealterten Katalysatoren bei 200 °C und 250 °C bessere Speicherwirkungsgrade.

**Beispiel 4** (Katalysatoren K4a und K4b)

Die Beschichtung von Katalysator 4a enthält wie beim Katalysator 1a neben dem Speichermaterial BaO/Ce/Zr-Oxid das mit Platin katalysierte Mg/Al-Mischoxid II. Zusätzlich enthält die Beschichtung wie beim Vergleichskatalysator VK1 ein mit Rhodium katalysiertes La/Al$_2$O$_3$.

Im Unterschied zu Katalysator 4a wurde beim Katalysator 4b das Mg/Al-Mischoxid II zusätzlich zum Platin noch mit Palladium belegt.

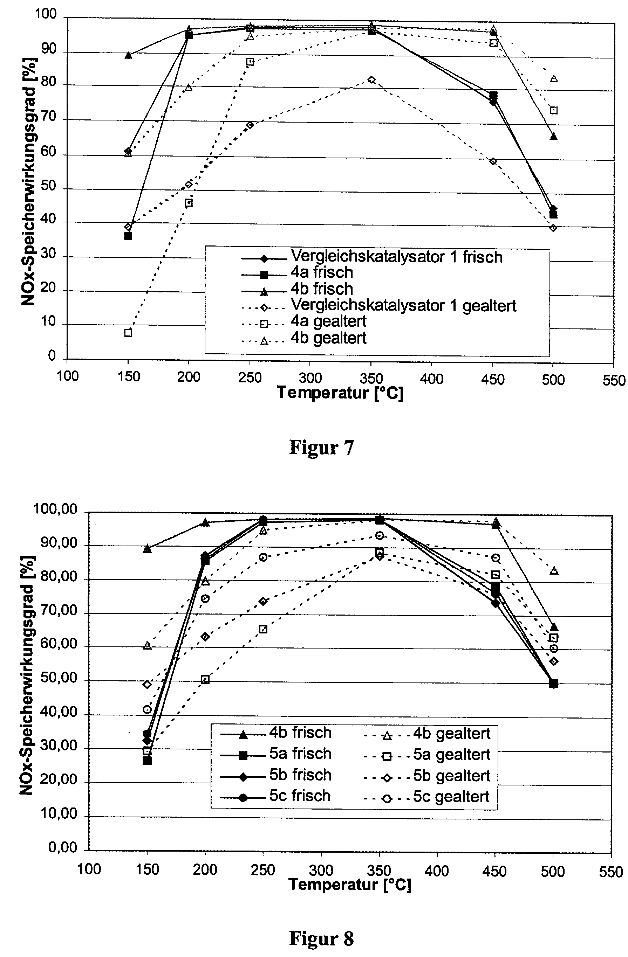

Wie Figur 7 zeigt, weisen die Speicherwirkungsgrade der erfindungsgemäßen Katalysatoren 4a und 4b im gealterten Zustand wesentliche Vorteile gegenüber dem Vergleichskatalysator VK1 auf. Katalysator 4b weist sowohl im frischen als auch im gealterten Zustand die besten Speicherwirkungsgrade auf.

**Beispiel 5** (Katalysatoren K5a, K5b und K5c)

Um den Einfluß des Mischungsverhältnisses von Magnesiumoxid zu Aluminiumoxid im homogenen Mg/Al-Mischoxid auf den Speicherwirkungsgrad zu untersuchen, wurde ausgehend von der Katalysatorformulierung gemäß Katalysator 4b das Mg/Al-Mischoxid II durch die Mischoxide I, III und IV ersetzt.

Die sich daraus ergebenden Katalysatoren 5a, 5b und 5c hatten die in Tabelle 3 wiedergegebenen Zusammensetzungen:

In Figur 8 werden die frischen und gealterten Speicherwirkungsgrade dieser Katalysatoren mit denen von Katalysator 4b verglichen. Es zeigt sich, daß Katalysator 4b sowohl im frischen als auch im gealterten Zustand die besten Speicherwirkungsgrade aufweist, das heißt die besten Ergebnisse werden mit dem Mg/Al-Mischoxid II mit einem MgO/Al$_2$O$_3$-Verhältnis von 20/80 erzielt.

**Vergleichsbeispiel 3:** (Vergleichskatalysator VK3)

Vergleichskatalysator VK3 wurde analog zu Katalysator 4b hergestellt, jedoch wurde das homogene Mg/Al-Mischoxid II durch ein mit Magnesiumoxid dotiertes Aluminiumoxid ausgetauscht. Dieses Material wurde durch Imprägnieren von γ-Al$_2$O$_3$ mit Magnesiumacetat, Trocknen und Calcinieren bei 900 °C für die Dauer von 2 Stunden erhalten. In Tabelle 3 wird dieses Material mit Mg/Al-Oxid II bezeichnet, um es von dem homogenen Mg/Al-Mischoxid II zu unterscheiden. Es besaß wie das Mg/Al-Mischoxid II ein MgO/Al$_2$O$_3$-Verhältnis von 20/80.

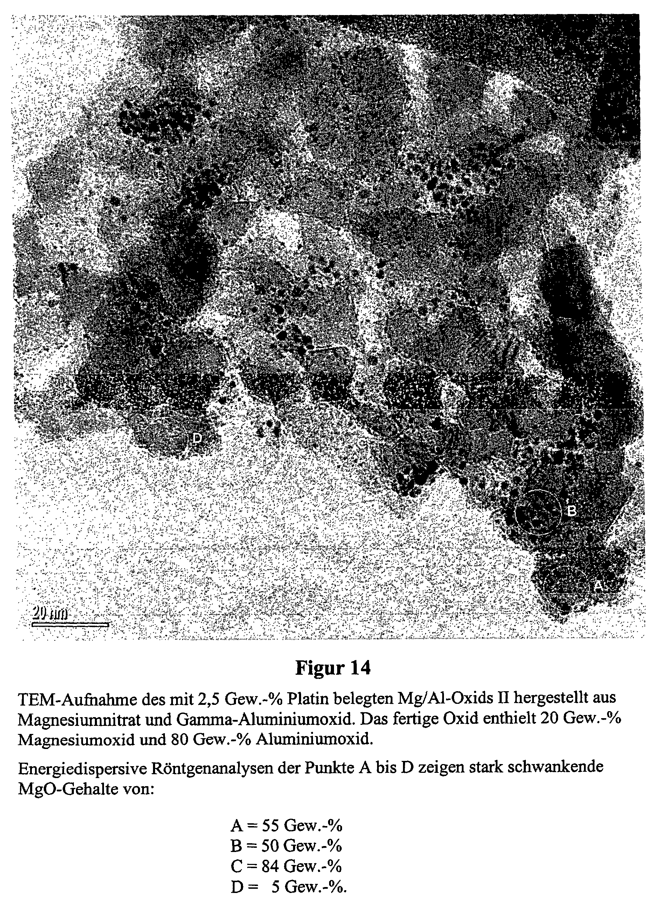

Das Mg/Al-Oxid II wurde ebenfalls nach Imprägnierung mit 2,5 Gew.-% Platin im Elektronenmikroskop untersucht. Figur 14 zeigt eine entsprechende Aufnahme des Materials. Die Zusammensetzung des Materials wurde an den Punkten A bis D mit Hilfe der energiedispersiven Röntgenanalyse bestimmt. Im Gegensatz zu dem homogenen Mg/Al-Mischoxid II wies das imprägnierte Mg/Al-Oxid II in Abhängigkeit vom Untersuchungspunkt starke Schwankungen der Konzentrationswerte für das Magnesiumoxid auf. Im einzelnen ergaben sich an den Untersuchungspunkten folgende Konzentrationswerte:

A = 55 Gew.-%

B = 50 Gew.-%

C = 84 Gew.-%

D = 5 Gew.-%.

**Vergleichsbeispiel 4:** (Vergleichskatalysator VK4)

Vergleichskatalysator VK4 wurde analog zu Katalysator 5a hergestellt, jedoch wurde das homogene Mg/Al-Mischoxid III durch ein mit Magnesiumoxid dotiertes Aluminiumoxid ausgetauscht. Dieses Material wurde durch Imprägnieren von $\gamma$-Al2O3 mit Magnesiumacetat, Trocknen und Calcinieren bei 900°C für die Dauer von 2 Stunden erhalten. In Tabelle 3 wird dieses Material mit Mg/Al-Oxid III bezeichnet, um es von dem homogenen Mg/Al-Mischoxid III zu unterscheiden. Es besaß wie das Mg/Al-Mischoxid III ein $MgO/Al_2O_3$-Verhältnis von 10/90.

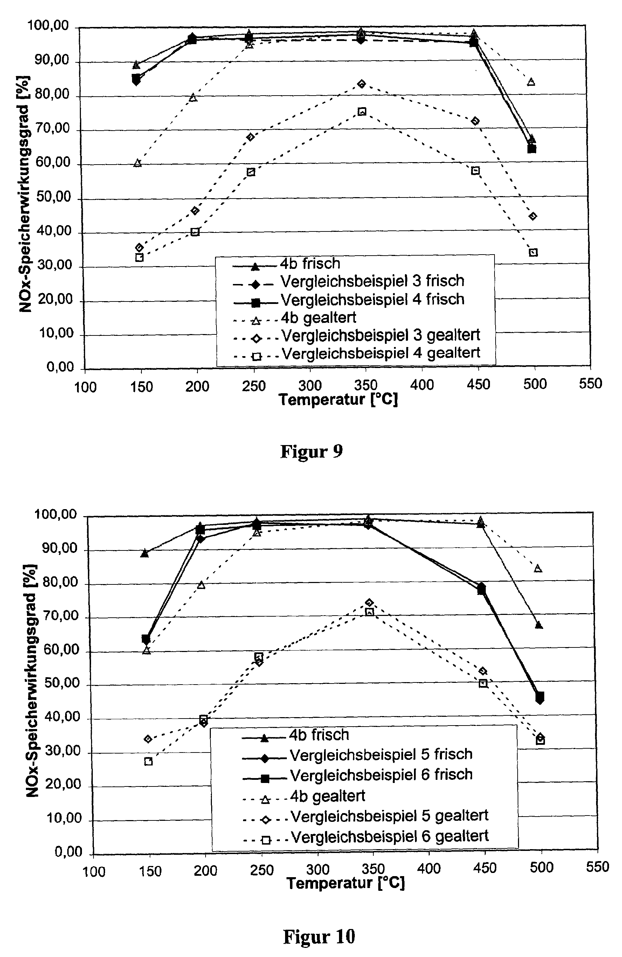

Figur 9 zeigt den Vergleich der Speicherwirkungsgrade der beiden Vergleichskatalysatoren VK3 und VK4 mit dem Speicherwirkungsgrad von Katalysator 4b. Die beiden Vergleichskatalysatoren unterscheiden sich im Frischzustand kaum von dem Katalysator 4b. Nach Alterung sind die Vergleichskatalysatoren deutlich schlechter. Diese Ergebnisse belegen, daß eine oberflächliche Imprägnierung vom Aluminiumoxid mit Magnesiumoxid nicht zu dem gewünschten synergistischen Effekt führt. Eine Erweiterung des Temperaturfensters insbesondere nach thermischer Alterung liegt nicht vor. Nur eine homogene Verteilung des Magnesiumoxids im Aluminiumoxid führt zu der gewünschten hohen Temperaturbeständigkeit des Katalysators.

**Vergleichsbeispiel 5:** (Vergleichskatalysator VK5)

Vergleichskatalysator VK5 wurde analog zu Katalysator 4a hergestellt, jedoch wurde das homogene Mg/Al-Mischoxid II gegen einen Hydrotalcit ausgetauscht, der bei 900 °C für die Dauer von 2 Stunden calciniert worden war. Das $MgO/Al_2O_3$-Verhältnis des Hydrotalcit betrug 50:50.

**Vergleichsbeispiel 6:** (Vergleichskatalysator VK6)

Vergleichskatalysator VK6 wurde analog zu Katalysator 4b hergestellt, jedoch wurde das homogene Mg/Al-Mischoxid II durch eine physikalische Mischung aus einem mit Lanthan stabilisierten $\gamma$-Aluminiumoxid und Magnesiumoxid im Mischungsverhältnis 80/20 ersetzt. Die Mischung der beiden Pulvermaterialien wurde unter Anwendung der bekannten Porenvolumenimprägnierung mit 2,5 Gew.-% Platin imprägniert. Als Vorläuferverbindung des Platins wurde hierfür die schon in den anderen Beispielen verwendete wäßrige Lösung von in Ethanolamin gelöster Hexahydroxoplatinsäure ($H_2Pt(OH)_6$) eingesetzt. Das imprägnierte Material wurde getrocknet und bei 500 °C für die Dauer von 2 Stunden an Luft calciniert.

Figur 10 zeigt den Vergleich der Speicherwirkungsgrade der beiden Vergleichskatalysatoren VK5 und VK6 mit dem Speicherwirkungsgrad von Katalysator 4b. Die beiden Vergleichskatalysatoren weisen schon im Frischzustand gegenüber Katalysator 4b eine geringere Breite des Temperaturfensters auf. Nach Alterung sind die Vergleichskatalysatoren noch deutlich schlechter.

Die Ergebnisse der Vergleichsbeispiele 3 bis 6 belegen, daß weder der Hydrotalcit noch die physikalische Mischung aus Aluminiumoxid und Magnesiumoxid noch eine Imprägnierung von Aluminiumoxid mit Magnesiumoxid an den positiven Einfluß eines homogenen Mg/Al-Mischoxids auf den Speicherwirkungsgrad heranreichen.

**Beispiel 6:** (Katalysatoren 6a und 6b)

Die beiden Katalysatoren 6a und 6b wurden ebenfalls analog zu Katalysator 4b hergestellt.

Im Unterschied zu Katalysator 4b wurde für Katalysator 6a das mit Platin katalysierte Mg/Al-Mischoxid II vor dem Anfertigen der Beschichtungssuspension durch Imprägnieren mit einer wäßrigen Lösung von Praseodymacetat, Trockenen und Calcinieren mit 10 g Praseodymoxid modifiziert.

Für Katalysator 6b wurde das Mg/Al-Mischoxid II in einem ersten Schritt nur mit 5 g Praseodymoxid und in einem zweiten Schritt durch Imprägnieren mit Cernitrat mit 5 g Ceroxid modifiziert. Nach jedem Imprägnierschritt wurde das Material getrocknet und calciniert. Die Zusammensetzung der beiden Katalysatoren 6a und 6b ist in den Tabellen 20 und 21 wiedergegeben.

**Beispiel 7:** (Katalysatoren 7a und 7b)

Katalysator 7a wurde analog zu Katalysator 6a hergestellt. Anstelle mit Praseodymoxid wurde das mit Platin katalysierte Mg/Al-Mischoxid II mit 10 g Ceroxid durch Imprägnieren mit Cernitrat, Trocknen und Calcinieren modifiziert.

Im Unterschied zu Katalysator 7a wurde für die Herstellung von Katalysator 7b das Mg/Al-Mischoxid II nur mit 5 g Ceroxid modifiziert.

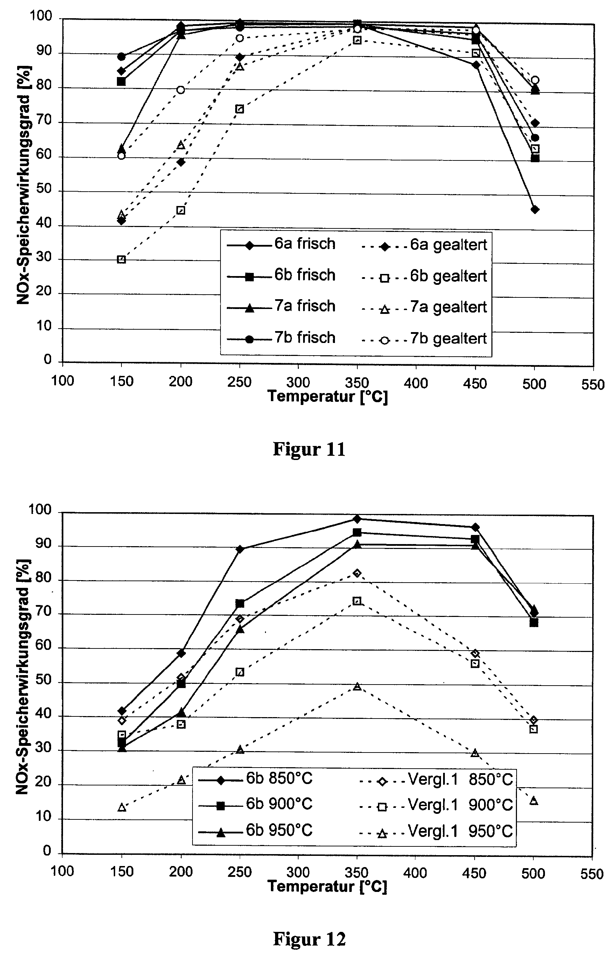

Figur 11 zeigt den Einfuß einer Imprägnierung des homogenen Mg/Al-Mischoxids mit Praseodym und/oder Cer. Die Imprägnierung des homogenen Mg/Al-Mischoxids mit 4 Gew.-% Ceroxid führt zu einer weiteren Verbesserung des Speicherwirkungsgrades.

**Beispiel 8:**

Die Katalysatoren VK1 von Vergleichsbeispiel 1 und K6b von Beispiel 6 wurden einer verschärften thermischen Alterung unterworfen. Hierzu wurden die Katalysatoren bei Temperaturen von 850, 900 und 950 °C jeweils für die Dauer von 24 Stunden an Luft gelagert.

Figur 12 zeigt die Speicherwirkungsgrade der Katalysatoren nach dieser thermischen Schädigung. Die Unterschiede zwischen beiden Katalysatoren sind nach der Alterung bei 950 °C besonders ausgeprägt. Katalysator 6b weist nach dieser Alterung noch bei einer Abgastemperatur von 150°C einen Speicherwirkungsgrad auf, den der Vergleichskatalysator erst bei einer Abgastemperatur von 250 °C erreicht. Bei hohen Abgastemperaturen ist der Einfluß der Alterung beim erfindungsgemäßen Katalysator K6b relativ gering, während der Speicherwirkungsgrad des Vergleichskatalysators sich in etwa halbiert, wenn er statt bei 850 °C bei 950 °C gealtert wird.

Tabelle 3:

| Zusammensetzung der Katalysatoren | | | | |
|---|---|---|---|---|
| Beschichtungskomponente | Konzentration [g/l] | Platin [g/l] | Palladium [g/l] | Rhodium [g/l] |
| Vergleichskatalysator VK1 | | | | |
| 10La/Al$_2$O$_3$ | 123,9 | 3,18 | 1,06 | |
| 3La/Al$_2$O$_3$ | 10 | | | 0,35 |
| BaO/Ce/Zr-Oxid | 160 | | | |
| Vergleichskatalysator VK2 | | | | |
| Mg/Al-Mischoxid II (20/80) | 123,9 | 3,18 | | |
| Mg/Al-Mischoxid II (20/80) | 160 | | | |
| Katalysator K1a | | | | |
| Mg/Al-Mischoxid II (20/80) | 123,9 | 3,18 | | |
| BaO/Ce/Zr-Oxid | 160 | | | |
| Katalysator K1b | | | | |
| Mg/Al-Mischoxid II (20/80) | 123,9 | 3,18 | | |
| BaO/Ce/Zr-Oxid | 160 | | | |
| Katalysator K2a | | | | |
| Mg/Al-Mischoxid II (20/80) | 123,9 | 3,18 | 1,06 | |
| BaO/Ce/Zr-Oxid | 160 | | | |
| Katalysator K2b | | | | |
| Mg/Al-Mischoxid II (20/80) | 123,9 | 3,18 | 1,06 | |
| BaO/Ce/Zr-Oxid | 160 | | | |
| Katalysator K3a | | | | |
| Mg/Al-Mischoxid II (20/80) | 123,9 | 3,18 | | 1,06 |
| BaO/Ce/Zr-Oxid | 160 | | | |
| Katalysator K3b | | | | |
| Mg/Al-Mischoxid II (20/80) | 123,9 | 3,18 | | 1,06 |
| BaO/Ce/Zr-Oxid | 160 | | | |
| Katalysator K4a | | | | |
| Mg/Al-Mischoxid II (20/80) | 123,9 | 3,18 | | |
| 3La/Al$_2$O$_3$ | 10 | | | 0,35 |

Tabelle 3: (fortgesetzt)

| Zusammensetzung der Katalysatoren | | | | |
|---|---|---|---|---|
| Katalysator K4a | | | | |
| BaO/Ce/Zr-Oxid | 160 | | | |
| Katalysator K4b | | | | |
| Mg/Al-Mischoxid II (20/80) | 123,9 | 3,18 | 1,06 | |
| 3La/Al$_2$O$_3$ | 10 | | | 0,35 |
| BaO/Ce/Zr-Oxid | 160 | | | |
| Katalysator K5a | | | | |
| Mg/Al-Mischoxid III (10/90) | 123,9 | 3,18 | 1,06 | |
| 3La/Al$_2$O$_3$ | 10 | | | 0,35 |
| BaO/Ce/Zr-Oxid | 160 | | | |
| Katalysator K5b | | | | |
| Mg/Al-Mischoxid IV (5/95) | 123,9 | 3,18 | 1,06 | |
| 3La/Al$_2$O$_3$ | 10 | | | 0,35 |
| BaO/Ce/Zr-Oxid | 160 | | | |
| Katalysator K5c | | | | |
| Mg/Al-Mischoxid I (28,2/71,8) | 123,9 | 3,18 | 1,06 | |
| 3La/Al$_2$O$_3$ | 10 | | | 0,35 |
| BaO/Ce/Zr-Oxid | 160 | | | |
| Vergleichskatalysator VK3 | | | | |
| Mg/Al-Oxid II (20/80) | 123,9 | 3,18 | 1,06 | |
| 3La/Al$_2$O$_3$ | 10 | | | 0,35 |
| BaO/Ce/Zr-Oxid | 160 | | | |
| Vergleichskatalysator VK4 | | | | |
| Mg/Al-Oxid III (10/90) | 123,9 | 3,18 | 1,06 | |
| 3La/Al$_2$O$_3$ | 10 | | | 0,35 |
| BaO/Ce/Zr-Oxid | 160 | | | |
| Vergleichskatalysator VK5 | | | | |
| Hydrotalcit; calciniert (50/50) | 123,9 | 3,18 | 1,06 | |
| 3La/Al$_2$O$_3$ | 10 | | | 0,35 |
| BaO/Ce/Zr-Oxid | 160 | | | |
| Vergleichskatalysator VK6 | | | | |
| MgO + Al$_2$O$_3$ (20/80) | 123,9 | 3,18 | 1,06 | |
| 3La/Al$_2$O$_3$ | 10 | | | 0,35 |
| BaO/Ce/Zr-Oxid | 160 | | | |
| Katalysator K6a | | | | |
| Mg/Al-Mischoxid II (20/80) + Pr$_6$O$_{11}$ | 123,9 10 | 3,18 | 1,06 | |
| 3La/Al$_2$O$_3$ | 10 | | | 0,35 |

Tabelle 3: (fortgesetzt)

| Zusammensetzung der Katalysatoren | | | | |
|---|---|---|---|---|
| Vergleichskatalysator VK5 | | | | |
| Katalysator K6a | | | | |
| BaO/Ce/Zr-Oxid | 160 | | | |
| Katalysator K6b | | | | |
| Mg/Al-Mischoxid II (20/80) + $Pr_6O_{11}$ + $CeO_2$ | 123,9 5 5 | 3,18 | 1,06 | |
| 3La/$Al_2O_3$ | 10 | | | 0,35 |
| BaO/Ce/Zr-Oxid | 160 | | | |
| Katalysator K7a | | | | |
| Mg/Al-Mischoxid II (20/80) + $CeO_2$ | 123,9 10 | 3,18 | 1,06 | |
| 3La/$Al_2O_3$ | 10 | | | 0,35 |
| BaO/Ce/Zr-Oxid | 160 | | | |
| Katalysator K7b | | | | |
| Mg/Al-Mischoxid II (20/80) + $CeO_2$ | 123,9 5 | 3,18 | 1,06 | |
| 3La/$Al_2O_3$ | 10 | | | 0,35 |
| BaO/Ce/Zr-Oxid | 160 | | | |

**Patentansprüche**

1. Katalysator zur Verminderung der Stickoxide im Abgas von Magermotoren enthaltend wenigstens ein Edelmetall der Platingruppe des periodischen Systems der Elemente sowie wenigstens ein Stickoxid-Speichermaterial, welches mindestens eine Stickoxid-Speicherkomponente auf einem oder mehreren Trägermaterialien enthält, in Kombination mit einem homogenen Mg/Al-Mischoxid aus Magnesiumoxid und Aluminiumoxid, wobei Magnesiumoxid in einer Konzentration von 1 bis 40 Gew.-%, bezogen auf das Gesamtgewicht des Mg/Al-Mischoxids, vorliegt.

2. Katalysator nach Anspruch 1,
   **dadurch gekennzeichnet,**
   **daß** die Edelmetalle ausgewählt sind aus Platin, Palladium, Rhodium oder Mischungen davon und vollständig oder teilweise auf dem Mg/Al-Mischoxid abgeschieden sind.

3. Katalysator nach Anspruch 2,
   **dadurch gekennzeichnet,**
   **daß** das Mg/Al-Mischoxid oberflächlich mit einem oder mehreren Seltenerdoxiden belegt ist.

4. Katalysator nach Anspruch 3,
   **dadurch gekennzeichnet,**
   **daß** das Mg/Al-Mischoxid mit Praseodymoxid und/oder Ceroxid belegt ist.

5. Katalysator nach einem der Ansprüche 1 bis 4,
   **dadurch gekennzeichnet,**
   **daß** das Magnesiumoxid in einer Konzentration von 5 bis 28 Gew.-%, bezogen auf das Gesamtgewicht des Mischoxids, vorliegt.

6. Katalysator nach Anspruch 5,

**dadurch gekennzeichnet,**

**daß** das Magnesiumoxid in einer Konzentration von 10 bis 25 Gew.-%, bezogen auf das Gesamtgewicht des Mischoxids, vorliegt.

7. Katalysator nach einem der Ansprüche 1 bis 4,
**dadurch gekennzeichnet,**
**daß** die Stickoxid-Speicherkomponenten Oxide, Carbonate oder Hydroxide von Elementen sind, welche ausgewählt sind aus der Gruppe bestehend aus Magnesium, Calcium, Strontium, Barium, den Alkalimetallen, den Seltenerdmetallen oder Mischungen davon.

8. Katalysator nach Anspruch 7,
**dadurch gekennzeichnet,**
**daß** das Trägermaterial für die Stickoxid-Speicherkomponenten aus einem oder mehreren hochschmelzenden Metalloxiden besteht.

9. Katalysator nach Anspruch 8,
**dadurch gekennzeichnet,**
**daß** die hochschmelzenden Metalloxide ausgewählt sind aus der Gruppe bestehend aus Ceroxid, Mischoxiden des Cers, Aluminiumoxid, Magnesiumoxid, einem homogenen Mg/Al-Mischoxid, Calciumtitanat, Strontiumtitanat, Bariumtitanat, Bariumzirkonat, Lanthanoxid, Praseodymoxid, Samariumoxid, Neodymoxid, Yttriumoxid und Lanthanmanganat oder Mischungen davon.

10. Katalysator nach Anspruch 9,
**dadurch gekennzeichnet,**
**daß** die Stickoxid-Speicherkomponenten ein Oxid, Carbonat oder Hydroxid von Strontium oder Barium sind, welche auf einem Trägermaterial aus Ceroxid oder Mischoxiden des Cers fixiert sind.

11. Katalysator nach Anspruch 10,
**dadurch gekennzeichnet,**
**daß** als Trägermaterial für die Stickoxid-Speicherkomponenten ein Mischoxid des Cers vorliegt, welches mit 0,5 bis 80 Gew.-% mindestens eines Oxids eines Elementes aus der Gruppe gebildet aus Zirkon, Silicium, Scandium, Yttrium, Lanthan und den Seltenerdmetallen oder Mischungen davon, bezogen auf das Gesamtgewicht des Speichermaterials, dotiert ist.

12. Katalysator nach Anspruch 11,
**dadurch gekennzeichnet,**
**daß** als Trägermaterial für die Stickoxid-Speicherkomponenten ein Cer/Zirkon-Mischoxid mit einem Zirkonoxidgehalt von 1 bis 25 Gew.-%, bezogen auf das Gesamtgewicht des Mischoxids, verwendet wird.

13. Katalysator nach Anspruch 12,
**dadurch gekennzeichnet,**
**daß** das Cer/Zirkon-Mischoxid mit 0,5 bis 10 Gew.-% Lanthan- und/oder Praseodymoxid, bezogen auf das Gesamtgewicht von Cer/Zirkon-Mischoxid und Lanthan- und/oder Praseodymoxid, dotiert ist.

14. Katalysator nach einem der Ansprüche 1 bis 4,
**dadurch gekennzeichnet,**
**daß** auf dem homogenen Mg/Al-Mischoxid die Edelmetalle Platin und/oder Palladium aufgebracht sind.

15. Katalysator nach Anspruch 14,
**dadurch gekennzeichnet,**
**daß** auch auf dem Stickoxid-Speichermaterial Platin abgeschieden ist.

16. Katalysator nach Anspruch 15,
**dadurch gekennzeichnet,**
**daß** der Katalysator als weiteres Trägermaterial aktives, gegebenenfalls stabilisiertes, Aluminiumoxid enthält, auf welchem Rhodium abgeschieden ist.

17. Katalysator nach Anspruch 15,

**dadurch gekennzeichnet,**
**daß** der Katalysator als weiteres Trägermaterial Ceroxid oder ein Cer/Zirkon-Mischoxid enthält, auf welchem Platin abgeschieden ist.

18. Katalysator nach einem der Ansprüche 1 bis 4,
**dadurch gekennzeichnet,**
**daß** auf dem homogenen Mg/Al-Mischoxid die Edelmetalle Platin und/oder Rhodium aufgebracht sind.

19. Katalysator nach Anspruch 18,
**dadurch gekennzeichnet,**
**daß** auch auf dem Stickoxid-Speichermaterial Platin abgeschieden ist.

20. Katalysator nach Anspruch 19,
**dadurch gekennzeichnet,**
**daß** der Katalysator als weiteres Trägermaterial aktives, gegebenenfalls stabilisiertes, Aluminiumoxid enthält, auf welchem Rhodium abgeschieden ist.

21. Katalysator nach Anspruch 19,
**dadurch gekennzeichnet,**
**daß** der Katalysator als weiteres Trägermaterial Ceroxid oder ein Cer/Zirkon-Mischoxid enthält, auf welchem Platin abgeschieden ist.

22. Katalysator nach Anspruch 1,
**dadurch gekennzeichnet,**
**daß** er in Form einer Beschichtung auf einem inerten Tragkörper aus Keramik oder Metall aufgebracht ist.

23. Verwendung des Katalysators nach Anspruch 1 für die Abgasreinigung von Magermotoren.

**Ermittlung des NO-Speicherwirkungsgrades**

Figur 1

Figur 2

**Figur 3**

**Figur 4**

**Figur 5**

**Figur 6**

**Figur 7**

**Figur 8**

**Figur 9**

**Figur 10**

**Figur 11**

**Figur 12**

Figur 13

TEM-Aufnahme eines mit 2,5 Gew.-% Platin belegten Mg/Al-Mischoxids II aus 20 Gew.-% Magnesiumoxid und 80 Gew.-% Aluminiumoxid, wobei das Magnesiumoxid homogen im Aluminiumoxid gelöst ist.

Energiedispersive Röntgenanalysen der Punkte A, B und C zeigen einen im Rahmen der Meßgenauigkeit konstanten MgO-Gehalt von 20 Gew.-%.

**Figur 14**

TEM-Aufnahme des mit 2,5 Gew.-% Platin belegten Mg/Al-Oxids II hergestellt aus Magnesiumnitrat und Gamma-Aluminiumoxid. Das fertige Oxid enthielt 20 Gew.-% Magnesiumoxid und 80 Gew.-% Aluminiumoxid.

Energiedispersive Röntgenanalysen der Punkte A bis D zeigen stark schwankende MgO-Gehalte von:

A = 55 Gew.-%
B = 50 Gew.-%
C = 84 Gew.-%
D =  5 Gew.-%.

**Europäisches Patentamt**

# EUROPÄISCHER RECHERCHENBERICHT

Nummer der Anmeldung

EP 01 12 8599

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | EP 0 945 165 A (DEGUSSA)<br>29. September 1999 (1999-09-29)<br>* Seite 3, Zeile 28 - Seite 4, Zeile 12 *<br>* Seite 4, Zeile 56 - Seite 5, Zeile 12;<br>Ansprüche 1-13; Beispiele 3-6; Tabelle 2 * | 1-23 | B01D53/94<br>B01J21/00<br>B01J23/58<br>B01J23/63 |
| X | US 3 990 998 A (DELUCA JOHN P ET AL)<br>9. November 1976 (1976-11-09)<br>* Ansprüche; Abbildung * | 1,5-9,22 | |
| X | EP 0 645 171 A (NAT SCIENCE COUNCIL)<br>29. März 1995 (1995-03-29)<br>* Seite 3, Zeile 3 - Zeile 8; Ansprüche<br>1-7; Beispiel 5; Tabelle 1 * | 1-11,14,<br>18,22,23 | |
| X | EP 0 890 389 A (DORNIER GMBH)<br>13. Januar 1999 (1999-01-13)<br>* Ansprüche 1-19 * | 1-6,<br>14-23 | |
| X | EP 0 982 066 A (DEGUSSA)<br>1. März 2000 (2000-03-01)<br>* Seite 8, Zeile 8 - Zeile 10; Ansprüche;<br>Tabelle 1 * | 1-23 | |

**RECHERCHIERTE SACHGEBIETE (Int.Cl.7)**

B01D
B01J

Der vorliegende Recherchenbericht wurde für alle Patentansprüche erstellt

| Recherchenort | Abschlußdatum der Recherche | Prüfer |
|---|---|---|
| MÜNCHEN | 20. März 2002 | Eijkenboom, A |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

........................................................................
& : Mitglied der gleichen Patentfamilie, übereinstimmendes Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 01 12 8599

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

20-03-2002

| Im Recherchenbericht angeführtes Patentdokument | | Datum der Veröffentlichung | Mitglied(er) der Patentfamilie | | Datum der Veröffentlichung |
|---|---|---|---|---|---|
| EP 0945165 | A | 29-09-1999 | DE | 19813655 A1 | 25-11-1999 |
| | | | AU | 2244099 A | 07-10-1999 |
| | | | BR | 9901205 A | 18-01-2000 |
| | | | CN | 1234289 A | 10-11-1999 |
| | | | CZ | 9901051 A3 | 17-11-1999 |
| | | | EP | 0945165 A2 | 29-09-1999 |
| | | | JP | 11319481 A | 24-11-1999 |
| | | | PL | 332228 A1 | 11-10-1999 |
| | | | TR | 9900708 A2 | 21-10-1999 |
| | | | US | 6338831 B1 | 15-01-2002 |
| | | | ZA | 9902323 A | 30-09-1999 |
| US 3990998 | A | 09-11-1976 | JP | 51147492 A | 17-12-1976 |
| EP 0645171 | A | 29-03-1995 | JP | 2631628 B2 | 16-07-1997 |
| | | | JP | 7204508 A | 08-08-1995 |
| | | | EP | 0645171 A1 | 29-03-1995 |
| EP 0890389 | A | 13-01-1999 | DE | 19825207 A1 | 14-01-1999 |
| | | | EP | 0890389 A1 | 13-01-1999 |
| | | | US | 6309617 B1 | 30-10-2001 |
| EP 0982066 | A | 01-03-2000 | DE | 19838282 A1 | 02-03-2000 |
| | | | AU | 4466799 A | 09-03-2000 |
| | | | BR | 9903875 A | 31-10-2000 |
| | | | CN | 1263789 A | 23-08-2000 |
| | | | EP | 0982066 A1 | 01-03-2000 |
| | | | JP | 2000084405 A | 28-03-2000 |
| | | | PL | 335071 A1 | 28-02-2000 |
| | | | TR | 9902000 A2 | 21-04-2000 |
| | | | US | 6350421 B1 | 26-02-2002 |
| | | | ZA | 9905349 A | 24-02-2000 |

EPO FORM P0461

Für nähere Einzelheiten zu diesem Anhang : siehe Amtsblatt des Europäischen Patentamts, Nr. 12/82